# EUROPEAN PATENT APPLICATION

(11) **EP 4 293 859 A1**
(43) Date of publication of application: **20.12.2023**
(21) Application number: 22178740.1
(22) Date of filing: 13.06.2022
(51) Int. Cl.: H02J 7/00, B60L 53/62, B60L 53/66

(54) **METHOD FOR METERING A CHARGING DEVICE, CHARGING DEVICE, COMPUTER PROGRAM ELEMENT AND COMPUTER READABLE MEDIUM**

(71) Applicant: ABB E-Mobility B.V., 2629 JG Delft (NL)
(72) Inventor: KOOLEN, Gertjan, 5622 CV Eindhoven (NL)
(74) Representative: Maiwald GmbH

(57) **Abstract**

Method for energy metering of a charging device, in particular an EV charging device, comprising:
- metering an energy level by at least one meter unit (11) during a charging session;
- monitoring a total energy level of the at least one meter unit (11) with a monitoring unit (12) at least in between two consecutive charging sessions and break /interrupt energy transfer when non-intentional energy transfer is detected; and
- comparing a start total energy level of a new charging session with a stop total energy level of a previous charging session.

## Description

### FIELD OF THE INVENTION

The invention relates to a method for metering a charging device, a charging device, a computer program element and a computer readable medium.

### BACKGROUND OF THE INVENTION

Charging devices are used in public spaces and in private areas, for example, at the side of a street or in private garages. Charging devices, especially EV charging devices, have high standards in quality and safety. Therefore, regulations may require trustworthiness of the metered energy, so that the final bill corresponds to the metered energy. For example, such regulations are in place in Germany. The German physical-technical federal institute's (PTB) regulations require trustworthiness of the metered energy. Meaning the charging device has to be certified, so it may not be possible that the bill shows a wrong energy level, even when the system has been hacked, corrupted, or because of a software bug in the uncertified software parts of the charger. Other countries may not have such regulations and hence do not need this requirement yet. This could possibly change in the future. Nevertheless, it is still advantageous to assure the trustworthiness of the metered energy value also in those countries.

Therefore, a reliable method for metering the energy level of a charging device or a charging device is required, which is configured to meter the correct energy level. Possible reasons for a wrongly metered energy level are technical malfunctions and when the charging device is hacked or corrupted. Furthermore, it is possible that the software of the charging device malfunctions because of a software bug. For example, software bugs may particularly occur after software updates.

It has now become apparent that there is a further need to provide an improved and more reliable method for metering the energy level of a charging device.

In view of the above, it is an object of the present invention to provide a method for metering a charging device. It is in particular an object of the present invention to provide a method for metering a charging device, which provides a more reliable metering of energy level outputs.

These and other objects, which become apparent upon reading the following description, are solved by the subject matter of the independent claims. The dependent claims refer to preferred embodiments of the invention.

### SUMMARY OF THE INVENTION

A first aspect of the present disclosure relates to a method for energy metering of a charging device, in particular an EV charging device, comprising:
metering an energy level by at least one meter unit during a charging session; monitoring a total energy level of the at least one meter unit with a monitoring unit at least in between two consecutive charging sessions; and
comparing, e.g. by the monitoring unit, a start total energy level of a new charging session with a stop total energy level of a previous charging session.

The at least one metering unit may be an AC or DC metering unit. The metering unit is, for example, used to meter the energy level during the charging session of an electric vehicle.

The energy level refers to the energy that is delivered via the charging device, for example, to a battery of a vehicle. The energy level may be measured by any applicable measurement method/device and may be provided in any measurement unit, e.g. Sl-unit, like kilowatt-hours. The energy levels may be provided as digital data.

The energy levels delivered during multiple consecutive charging sessions, metered by the same metering unit, accumulate. This means the energy level of each meter unit is ever increasing with each charging session. Each metering unit meters separate charging sessions. Therefore, each metering unit has its own accumulated energy level.

The accumulated energy level is monitored by the monitoring unit. The accumulated energy level is called the total energy level.

The stop total energy level is the accumulated energy level at the end of a respective charging session. The start total energy is the accumulated energy at the beginning of the respective charging session.

A charging session is the timeframe, in which the output of energy is metered. In other words, when for example a battery of an electric vehicle is charged. The meter units and therefore the charging sessions are preferably controlled by a software of the charging device.

The monitoring unit is instructed/informed by the charging device when a charging session starts and when a charging session stops. The monitoring unit may assure that all metered energy that belongs to a specific charging session is unmistakably traceable to that session, and that other software parts in the system cannot affect that, i.e. to prohibit other software parts in the system to affect that. Therefore, the start total energy level of a new charging session and the stop total energy level of a previous charging session are compared with each other by the monitoring unit and by comparing the total energy levels of two consecutive charging session at the end and at the beginning, it may be determined, if a wrong energy level was metered during the respective charging session. The metering of the energy level is started for example by the software of the charging device.

In an embodiment, if the start total energy level of a new charging session is different from the stop total energy level from the previous charging session, a message is generated, in particular a logbook entry in an electronic logbook of the monitoring unit. Additionally it is possible, that the difference is printed onto a receipt. In this way, the difference between the energy levels may be documented. This may be helpful for determining the cause of said difference and subsequently fixing the fault.

In an embodiment, the monitoring unit monitors at least one total energy level, in particular of at least one meter unit by reading out the monitoring unit at least in predefined periods, e.g. every second. By reading out the meter unit at least once a second in between two charging session, any change of the total energy level can be detected immediately. It is also possible that the monitoring unit monitors at least one total energy level continuously, meaning during and in between charging sessions.

In a further embodiment, the energy flow is stopped, if the monitoring unit detects a change in the total energy level in between charging sessions. Stopping the energy flow prevents the accumulated energy level to rise any further. More precisely, the energy flow is stopped/interrupted when a non-intentional energy flow is detected. In this way, the difference between a start total energy level of a new charging session and the stop total energy level of a previous charging session does not rise in a significant manner. In other words, the difference between the two energy levels remains almost zero. By doing so, it can be ensured that accumulated energy level does not change significantly.

In a different embodiment, the energy flow is stopped by a software reset, in particular by resetting the software of the charging device. In an alternative embodiment, the energy flow is stopped by activating a hardware interlock. In an embodiment, the energy flow is interrupted, e.g. by using a relay or contactor in the energy delivery path, ensuring that any "illegal or unwanted" energy flow is stopped. This means there may be different possibilities to stop the energy flow of the charging device. This may increase the reliability of a respective charging device. The described ways can be used together or separately.

In an embodiment, a predefined ranged is provided defining that the stop total energy level at the end of a charging session and the start total energy level of a consecutive charging session differ from each other. The range is preferable very small. More precisely, the range is chosen so that the difference between the start and stop total energy levels of two consecutive charging sessions is below a predefined value/threshold. The predefined range is preferably between 10⁻³ and 10⁻⁵, more preferably about 10⁻⁴, e.g. it is preferred that the predefined range does not exceed the fourth decimal place of the metered energy in kWh. Alternatively, any illegal or unwanted progression of the energy counter of the metering unit may be sufficient to break/interrupt the energy flow.

In an embodiment, energy counters of MID (measuring instruments directive) meters may comprise integer values, with defined steps (e.g. 0.1Wh), in particular with defined smallest steps. Between sessions, any change of the counter may be seen as an "illegal or unwanted" energy flow, which results in actively breaking/interrupting the current at system level. Therefore, between two consecutive sessions, the energy readouts should not differ more than the smallest energy step.

Another aspect of the present disclosure relates to a charging device, in particular an EV charging device, with at least one meter unit for metering an energy level of a charging session and at least one monitoring unit for monitoring at least one total energy level;
wherein the monitoring unit compares a start total energy level of a new charging session with the stop total energy level of a previous charging session, wherein the monitoring unit monitors the total energy level at least in between charging sessions.

A further aspect of the present disclosure relates to a computer program element with instruction, which, when executed on computing devices of a computing environment, is configured to carry out the method described above.

Another aspect of the present disclosure relates to a computer readable medium having stored the computer program element.

Another aspect of the present disclosure relates to a computer-implemented method for energy metering of a charging device, in particular an EV charging device, comprising:
providing metering data of an energy level of at least one meter unit during a charging session;
providing monitoring data of a total energy level of the at least one meter unit by a monitoring unit at least in between two consecutive charging sessions; and comparing a start total energy level of a new charging session with a stop total energy level of a previous charging session.

These and other features, aspects and advantages of the present invention will become better understood with reference to the accompanying figures and the following description.

### BRIEF DESCRIPTION OF THE DRAWINGS

- **Fig. 1**: shows a flow diagram according to prior art;
- **Fig. 2**: shows a diagram of a normal expected energy flow;
- **Fig. 3**: shows a diagram of a possible malfunction;
- **Fig. 4**: shows a diagram of a possible malfunction; and
- **Fig. 5**: shows a flow diagram according to an embodiment of the present disclosure.

### DESCRIPTION OF EMBODIMENTS

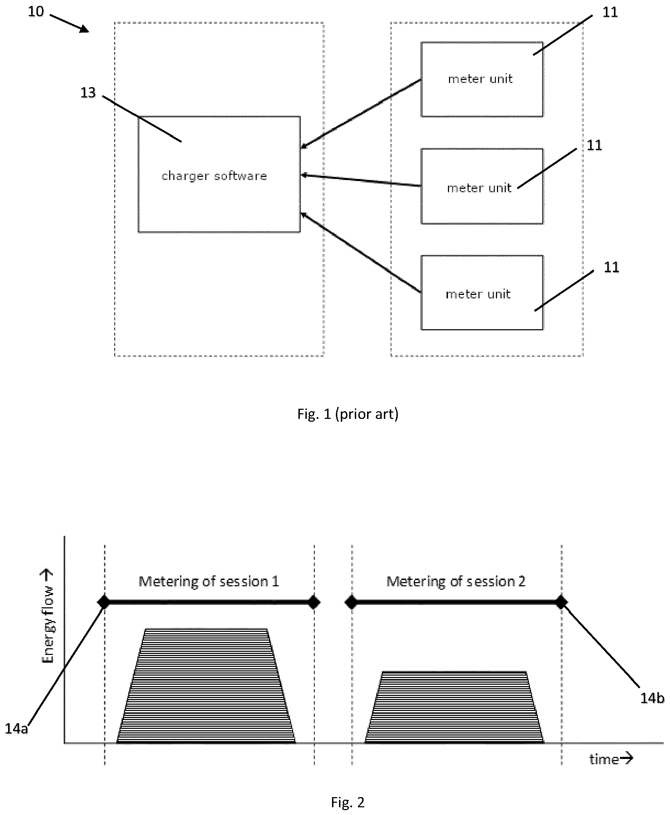

Fig. 1 shows a flow diagram according to a method of the prior art. The flow diagram shows a charger software 13, which is connected to three meter units 11. In other words, the charger software 13 communicates with the each meter unit 11 directly. The charger software 13 starts and stops the meter units 11 and therefore starts and stops the charging sessions of each meter unit 11. The energy levels of each charging session of a single meter unit 11 are accumulated and after each charging session, the metered energy level is stored.

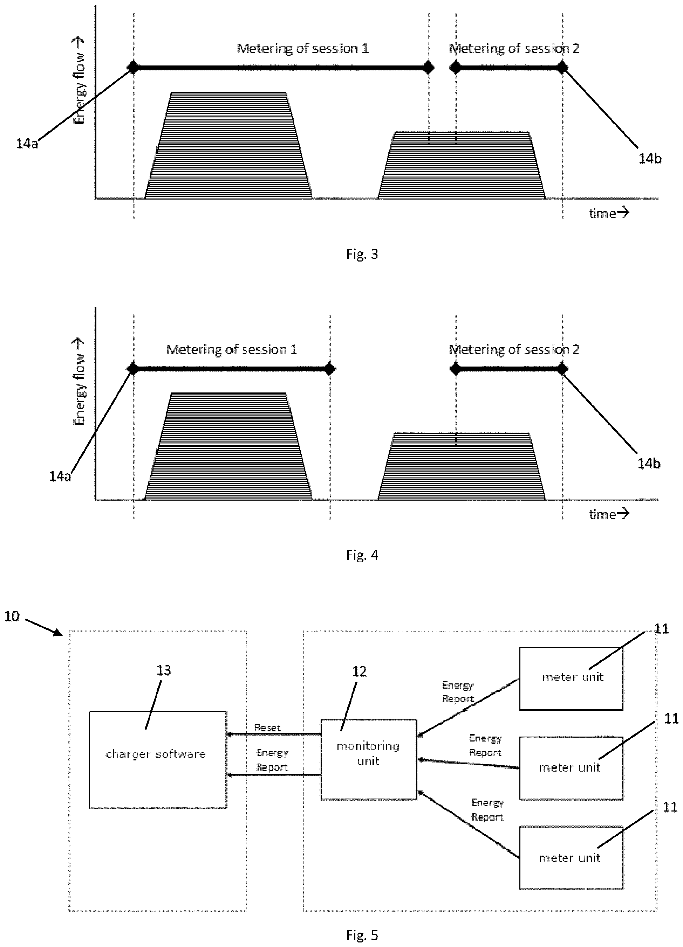

The diagram according to Fig. 2 shows two consecutive charging sessions of a meter unit 11 of a charging device 10, which is configured as shown in Fig. 1, without any malfunctions or errors. Fig. 3 and Fig. 4 each show a different case of a possible malfunction or error of a charging device 10 which is configured as shown in Fig. 1.

Fig. 2 shows the energy flow over time. More precisely, Fig. 2 illustrates a first charging session 14a and a second charging session 14b. In each charging session, an energy flow is metered. Both charging sessions are metered by the same meter unit 11. The energy flow in the first charging session 14a is bigger than in the second charging session 14b. Both charging sessions 14a, 14b are metered separately without any malfunctions or errors. In addition, there is no additional energy flow in between the two charging session 14a, 14b. Meaning the metering of the first charging session 14a and the metering during the second charging session 14b only include their respective (true/actual) energy flow. More precisely, the total energy level is correctly measured. Meaning the difference between the start total energy level and the stop total energy level is zero.

The diagram according to Fig. 3 shows the same two energy flows as Fig. 2. Also, both charging sessions are metered by the same meter unit 11. Contrary to Fig. 2, the metering of the first charging session 14a includes the complete energy flow of the first charging session 14a and a part of the energy flow of the second charging session 14b. The metering of the second charging session 14b therefore does not correspond to its actual energy flow. Additionally, there is a time-period between the first charging session 14a and the second charging session 14b without active metering. More precisely, the end of the first charging session 14a and the beginning of the second charging session 14b are during an energy flow. This means, that energy is actively delivered but not metered by the meter unit 11. As a result, this energy flow is not registered/recorded, but the total energy level of the meter unit 11 still increases. Therefore, the stop total energy level and the start total energy level are different in this diagram.

Fig. 4 also shows an energy flow over time, wherein the charging sessions are metered by the same meter unit 11. In Fig. 4, the first charging session 14a is metered correctly. The second charging session 14b begins after the energy flow has already started. That means the energy flow is not completely metered during the second charging session 14b. More specifically, the total energy level increases before the actual second charging process 14b has started. As a result, the stop total energy level of the first charging session 14a and the start total energy level of the second charging session 14b are different from each other.

Fig. 5 shows a flow diagram of a charging device 10 according to an embodiment of the present disclosure. Fig. 5 comprises the same elements as Fig.1. Contrary to Fig. 1, in Fig. 5 a monitoring unit 12 is arranged between the meter units 11 and the charger software 13. The meter units 11 are each connected directly with the monitoring unit 12. The monitoring unit 12 is connected directly with the charger software 13.

The meter units 11 have an ever-increasing energy level, which can also be described as accumulated energy level. The information regarding the accumulated energy levels of each meter unit 11 is sent via an energy report to the monitoring unit 12.

Preferably, the monitoring unit 12 is configured to read out each meter unit 11 at least at predetermined time-periods, e.g. every second.

The monitoring unit 12 may be active at least in between charging sessions. Alternatively or additionally, the monitoring unit 12 may also be active during charging sessions. The monitoring unit 12 compares the start total energy level of a new charging session with the stop total energy level of a previous charging session, i.e. between two consecutive charging sessions. If the compared values do not match, an error logbook entry is made inside the monitoring unit 12, e.g. in a logbook of the monitoring unit 12. Alternatively, the error message can be documented on a receipt. Alternatively or in addition, a respective message may be provided to a remote computing device.

As stated above, the monitoring unit 12 monitors the total energy level regularly, e.g. every second while the meter units 11 are inactive. Inactive means there is no ongoing intentional metering. The moment that the monitoring unit 12 observes any change in the total energy level, it will execute a software reset and/or breaks/interrupts the current with a hardware device (like relay, breaker or contactor). Alternatively or additionally, the monitoring device 12 activates a hardware interlock. All measures have the purpose of stopping any non-intentional energy flow. In this way, it is possible to determine what kind of error or malfunction may be present.

As a result, it can be assured that the consecutive stop and start total energy levels do not differ more than a predefined acceptable range from each other. It should be clear, that it may be a fraction of kWh, or any change of the counter/register of the meter unit 11. The range is for example not more than about four decimal digits of the metered energy in kWh. It is possible to know if the previous metering ended too early, or the new metering started too late. Therefore, these two feature for a reliable and malfunction resistant may be combined in an embodiment.

A possible embodiment comprises an EV charger, with one or more AC or DC meters, performing metering of charging sessions, using a monitoring unit 12 for comparing start and stop values of total energy levels of consecutive charging sessions, while assuring equality by activating an interlock signal when unexpected energy flow is determined.

The meter units 11 have an ever-increasing energy level, which can be called accumulated energy level or total energy level. The monitoring unit 12 can also be called a meter readout unit, which compares the start energy of a new session with the stop energy of the previous session. If an incorrect value is determined by the monitoring unit 12, an error logbook entry is made inside the monitoring unit 12, and the error is marked for example on a billing information or a receipt.

The monitoring unit 12 monitors the energy levels regularly, preferably every second, while the meter unit 11 is inactive, meaning no intentional metering is ongoing. The moment that the monitoring unit 12 observes any change in the accumulated or total energy level, it will "reset" the software, or activate a hardware interlock to force stopping any energy flow. This stopping is assured by design of the charging device 10.

This way it is assured that the consecutive stop and start total energy levels do not differ more than at least one significant digit. A difference in this range is acceptable for the PTB, as this will not affect the energy to be paid significantly, since the bill is usually rounded on three decimal digits, and kWh energy level read out by the meters usually has four or more decimal digits and also because this is regarded as an exception, and does not happen regularly. Furthermore, the remaining difference is far less than the minimum payment unit, which is usually a cent of a Dollar or of a Euro.

Any disclosure and embodiments described herein relate to the methods, the devices and the computer element lined out above or below and vice versa. The benefits provided by any of the embodiments and examples equally apply to all other embodiments and examples and vice versa.

It shall be noted that all embodiments of the present invention concerning the method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to an advantage. Any reference signs in the claims should not be construed as limiting the scope of the claims.

### List of reference signs

- 10: charging device
- 11: meter unit
- 12: monitoring unit
- 13: charger software
- 14a: first charging session
- 14b: second charging session

## Claims

1. Method for energy metering of a charging device, in particular an EV charging device, comprising:
- metering an energy level by at least one meter unit (11) during a charging session;
- monitoring a total energy level of the at least one meter unit (11) with a monitoring unit (12) at least in between two consecutive charging sessions; and
- comparing a start total energy level of a new charging session with a stop total energy level of a previous charging session.

2. Method according to claim 1;
**characterized in that**
if the start total energy level of a new charging session is different from the stop total energy level from the previous charging session, a message is generated, in particular a logbook entry is made in an electronic logbook of the monitoring unit (12).

3. Method according to claim 1 or 2;
**characterized in that**
the monitoring unit (12) monitors at least one total energy level, in particular of at least one meter unit (11), by reading out the monitoring unit (12) at least every second.

4. Method according to any one of the preceding claims;
**characterized in**
stopping the energy flow if a change in the total energy level in between charging sessions is detected by the monitoring unit (12).

5. Method according to claim 4;
**characterized in**
stopping the energy flow by a software reset, in particular by resetting the software of the charging device (10).

6. Method according to claim 4;
**characterized in**
stopping the energy flow by activating a hardware interlock.

7. Method according to any one of the preceding claims;
**characterized in that**
the stop total energy level at the end of a charging session and the start total energy level of a consecutive charging session differ from each other in a predefined range, in particular between 0,1 to 1,0 Wh.

8. Charging device, in particular an EV charging device, with at least one meter unit (11) for metering an energy level of a charging session;
at least one monitoring unit (12) for monitoring at least one total energy level; wherein the monitoring unit (12) compares a start total energy level of a new charging session with the stop total energy level of a previous charging session, wherein the monitoring unit (12) monitors the total energy level at least in between charging sessions.

9. Computer program element with instruction, which, when executed on computing devices of a computing environment, is configured to carry out the method according to any of the claims 1 to 7.

10. Computer readable medium having stored the computer program element according to claim 9.
